# EUROPEAN PATENT SPECIFICATION

(11) **EP 0 673 970 B1**
(45) Date of publication and mention of the grant of the patent: **02.06.1999**
(21) Application number: 95200672.4
(22) Date of filing: 20.03.1995
(51) Int. Cl.: C08L 53/02, C08L 51/00, B29D 29/06

(54) **Conveyor belts derived from compositions comprising vinyl aromatic-conjugated diene block copolymers**
Förderbänder abgeleitet von Zusammensetzungen auf Basis von Blockcopolymeren aus vinylaromatischem Monomer-konjugiertem Dien
Bandes transporteuses dérivées de compositions comprenant des copolymères blocs de monomère vinyl aromatique diene conjugué

(30) Priority: 25.03.1994 EP 94200799
(43) Date of publication of application: 27.09.1995
(73) Proprietor: SHELL INTERNATIONALE RESEARCH MAATSCHAPPIJ B.V., 2596 HR Den Haag (NL)
(72) Inventor: Maris, Catherina Augusta Louis, B-1348 Ottignies, Louvain-La -Neuve (BE); Migchels, Peter, B-1348 Ottignies, Louvain-La-Neuve (BE); Vermeire, Hans Ferdinand, B-1348 Ottignies, Louvain-La-Neuve (BE)

(56) References cited:
- EP-A- 0 322 055
- EP-A- 0 518 444
- WO-A-95/03447
- US-A- 5 002 997
- DATABASE WPI Section Ch, Week 8350 Derwent Publications Ltd., London, GB; Class A17, AN 83-842036 'Polyolefin laminate prodn.' & JP-A-58 191 128 (ASAHI CHEMICAL IND.) , 8 November 1983

## Description

The invention is relating to conveyor belts, at least one outside layer of which has been derived from compositions comprising vinyl aromatic-conjugated diene block copolymers and more in particular styrene-butadiene and/or styrene-isoprene block copolymers respectively, to block copolymer compositions to be used and to the process for the manufacture of said conveyor belts.

Conveyor belts for a variety of applications are at present almost exclusively manufactured of plasticized polyvinylchloride (PVC) or polyurethanes (TPU) in combination with one or more polyester (PET) or polyamide (PA) fabrics as support. Said belts are primarily used in the food industry and the business/services area.

The manufacture of said belts has up to now been carried out as a straightforward process in which PVC is applied to the base fabric as a plastisol, whereas polyurethanes are applied as powders.

In both cases fusion is achieved at about 200 °C during a short period in an oven, in general less than 1 minute, resulting in a bonding of the produced polymer sheet to the fabric of more than 2 N/mm and preferably of more than 3 N/mm as determined by a T-peel test.

However for reasons of required recyclability of these belts, high dirt pick-up of certain types and restricted use at low temperatures down to -40 °C, there has grown a strong need for alternative materials.

Therefore the primary object of the present invention is to provide such alternative conveyor belts, which have to be completely recyclable without any significant charge to environment due to production of toxic byproducts during recycling.

More in particular, the primary object of the invention is to provide such alternative conveyor belts, which are coated on at least one side of the fabric with an adequately bonded polymer layer (i.e. > 1.0 N/mm) and preferably > 1.3 N/mm, other than the presently used objected ones, and which, moreover, show a lateral stability i.e. a stability perpendicular to the direction of transportation of goods, and required abrasion resistance and hardness of the coating layer.

It will be appreciated that this aim could not be reached by using e.g. EPDM or TPU containing compositions when using the conventional application methods, such as extrusion/coating, or reversed roll-coating.

Moreover, it was generally known that for conventional conveyor belts to be produced from a latex of SBR (random vinyl aromatic/conjugated diene rubber) and fabric, the fabric threads had preferably been precoated with e.g. a resorcinol-formaldehyde latex, in order to obtain sufficient adhesion.

Moreover, it will be appreciated that such SBR or EPDM comprising conveyor belts have to be vulcanized by heat treatment in its final form.

The conveyor belts of the present invention, are obtainable by means of the application of a block copolymer composition, comprising at least:
(a) a block copolymer, containing at least two terminal poly(vinyl aromatic) blocks and at least one internal poly(conjugated diene) block, said block copolymer optionally being modified by grafting polar moieties on it,
(b) a non-aromatic plasticizing oil,
(c) a terminal block compatible resin;
on at least one side of a fabric having from 5 to 25 threads per cm in both directions, preferably 10 to 20 threads per cm and more preferably 15 to 18 threads per cm, i.e. (15-18)*(15-18) threads/cm² of fabric, while the threads in said fabric have a thickness in the range of from 20 µm to 300 µm and preferably from 100 µ to 300 µ.

The coating density of the hot melt composition in the conveyor belts of the present invention is in the range from 0.5 to 3 g/cm² and preferably in the range of from 1 to 2 g/cm².

It will be appreciated that conveyor belts according to the present invention may be obtained by coating one or both sides of a starting fabric with the same or different block copolymer compositions. Moreover, conveyor belts constituted by more than one fabric layer in a sandwich structure, coated on the outer surfaces and between the fabric layers with a block copolymer composition, are meant to be covered by the present invention.

Another aspect of the present invention is formed by a process for manufacturing conveyor belts, comprising the steps of:
forming a block copolymer composition comprising:
a block copolymer, containing at least two terminal poly(vinylaromatic) blocks and at least one internal poly(conjugated diene) block, said block copolymer optionally being modified by grafting polar moieties on it;
a non-aromatic plasticizing oil; and a terminal block compatible resin; and
applying the block copolymer composition on at least one side of a fabric to form a coating layer having a thickness in the range of from 0.5 to 5 mm, the fabric having from 5 to 25 threads per cm in both directions, while the threads in said fabric have a thickness in the range of from 20µ to 300µ.

The block copolymer compositions can be applied in the form of a hot melt or in the form of a powder which can be subsequently fused into a continuous layer by heat treatment.

The block copolymers which have been found to be suitably applied, preferably are linear triblock copolymers or multi-armed (more than 2 arms) radial or star shaped block copolymers, the blocks of which have been predominantly derived from styrene and butadiene or isoprene respectively, such as CARIFLEX TR block copolymers.

With the term "predominantly derived from" is meant that the main monomer of the respective individual blocks optionally may be mixed with minor amounts of another comonomer and more in particular with minor amounts of the main monomer of the other blocks.

Examples of the vinyl aromatic monomers may be selected from styrene, ∝-methylstyrene, p-methylstyrene, m-methylstyrene, o-methylstyrene, p-tert-butylstyrene, dimethylstyrene, vinylnaphthalene and the like and mixtures thereof and conjugated diene monomers may be selected from butadiene, isoprene, piperylene and the like, and mixtures thereof.

Of these monomers styrene and butadiene or isoprene or mixtures thereof are preferred. Most preferred block copolymers are those which only contain substantially pure poly(styrene) blocks and substantially pure poly(butadiene) or poly(isoprene) blocks.

Examples of such block copolymers which can be suitably used are CARIFLEX TR block copolymers (CARIFLEX is a trade mark). More preferably CARIFLEX TR-4113 or CARIFLEX TR KX158 block copolymers are used.

The block copolymers to be used as component (a) of the block copolymer composition may optionally be modified by grafting to them a polar entity, such as carboxylic acids or derivatives thereof, epoxy compounds, silane compounds, amines or amides. More preferred representatives of block copolymers, whereof the poly(conjugated diene) blocks have been grafted with unsaturated acid derivatives are known from e.g. British patent application No. 2,053,238.

It will be appreciated that also mixtures of unmodified block copolymers and of modified (preferably structurally related) block copolymers can be used as component (a).

Application of such mixtures of functionalized and non functionalized block copolymers have been found to provide an additionally improved bonding e.g. at least 1.0 N/mm.

In such mixtures the weight ratios of the unmodified and modified block copolymers components can vary in the range of from 99/1 to 40/60 and preferably in the range of from 90/10 to 50/50.

The terminal blocks in the block copolymers have usually molecular weights, ranging from 3,000 to 100,000 and preferably from 5,000 to 20,000, and the internal poly(conjugated diene) blocks usually have apparent molecular weights in the range of from 10,000 to 300,000 and preferably from 30,000 to 100,000. The poly(conjugated diene) blocks usually contain from 5 to 50 mol%, relative to the conjugated diene molecules, of vinyl groups originating from 1,2 polymerization.

The complete block copolymer to be used according to the present invention, is normally containing bound vinyl aromatic in an amount of from 30 to 60% by weight and preferably from 35 to 48% by weight. The apparent molecular weight of the total block copolymer will normally be in the range of from 20,000 to 350,000 and preferably in the range of from 40,000 to 200,000.

As component (b) various plasticizing oils are useful in the compositions to be used according to the present invention.

It will be appreciated that as component (a) also oil containing block copolymer compositions may be used instead of pure block copolymer(s), the added amount of oil of which may be compensated via the component (b) amount.

Plasticizing oils which have been found useful include petroleum derived oils, olefin oligomers and low molecular weight polymers, as well as vegetable and animal oil and their derivatives.

The petroleum derived oils which may be employed are relatively high boiling materials, containing only a minor proportion of aromatic hydrocarbons preferably less than 20 percent and more preferably less than 15 percent by weight of the oil most preferably the oil may be totally non-aromatic. The oligomers may be polypropylene, polybutenes, hydrogenated polyisoprene, hydrogenated polybutadiene, polypiperylene and copolymers of piperylene and isoprene, having average molecular weights between 350 and 10,000.

Vegetable and animal oils include glyceryl esters of the usual fatty acids and polymerization products thereof.

Examples of a preferred paraffinic oil are PRIMOL 352 (PRIMOL is a trade mark) Exxon EZL675 Oil and the NAPVIS and HYVIS (trade marks) polyolefins, having a molecular weight in the range of from 500 to 6,000. Preferably amounts of from 10 to 50 parts by weight per 100 parts by weight of block copolymer are applied, and more preferably from 25 to 40 parts by weight per 100 parts by weight of block copolymer are applied.

As component (c) various terminal block compatible resins are useful in the compositions used according to the present invention.

Examples of the terminal poly(vinyl aromatic) block compatible (modifying) resins include coumarone-indene resin, polyphenylene ethers and more particularly poly(2,6-dimethyl1,4-phenylene ether), polystyrene resin, vinyltoluene-alphamethylstyrene copolymer resin, polyindene resin, or poly(methyl indene) resin.

Examples of such commercial resins are HERCURES HM 100, ENDEX 160, KRISTALEX F 120, KRISTALEX F 5140, NEVCHEM NL 140 and PICCOTEX 120. (HERCURES, ENDEX, KRISTALEX, NEVCHEM and PICCOTEX are trade marks).

Amounts of from 1 to 40 parts by weight of said terminal block modifying resin per 100 parts by weight of block copolymer are applied, and more preferably from 5 to 30 parts by weight.

Preferred modifying resins are optionally toughened polystyrene resins and/or polyphenylene ethers. More preferably toughened polystyrene resins are used, such as BASF TPS 476 POLYSTYROL.

The starting fabric may be based on a variety of synthetic or natural yarns, such as polyester (PET or PBT), polyamides, poly(ethylene), aramide, cotton, flax, of which polyester fabrics are preferred.

More preferably PET fabrics are used, which have long straight, relatively thick threads or filaments (e.g. 300 µm) in the main direction and thinner corrugated threads or filaments in the longitudinal direction (e.g. 100 µm). The fabric threads or filaments may have been pretreated with resorcinal--formaldehyde latex. Said fabrics have been found to provide an increased bonding to the vinyl aromatic/conjugated diene block polymer hot melt composition.

Moreover, it has been found that PET fabrics with cut filaments, giving a rough surface to the fabric, give the strongest bonding as compared with those of PET fabric with long (uncut) filaments.

It will be appreciated that the block copolymer composition may optionally contain, in addition to the three before-mentioned main components one or more auxiliary agents such as stabilizers, fillers, colouring agents, slip agents, and additional thermoplastic polymers, such as polyethylene and preferably LLDPE, polypropylene, ethylene vinyl acetate copolymers and the like.

The stabilizers or antioxidants optionally used in accordance with the practice of the present invention include high molecular weight hindered phenols and multifunctional phenols such as sulphur and/or phosphorus containing phenols. Hindered phenols are well known to those skilled in the art and may be characterized as phenolic compounds, "which also contain sterically bulky radicals in close proximity to the phenolic hydroxyl group thereof". In particular tertiary butyl groups or amyl groups generally are substituted onto the benzene ring in at least one of the ortho positions relative to the phenolic hydroxy group.

Representatives of such stabilizers are commercially available under the trade marks SUMILIZER and IRGANOX, e.g. SUMILIZER GM and GS, IRGANOX 1010.

As additional auxiliaries, inorganic and organic fillers can be used, which are well known in the art. Examples of such fillers include calcium carbonate, aluminium silicate, clay, tale titanium dioxide, bentonites, kaolin, barytes, mica, silica, barium sulfate or mixtures thereof. A preferred example of an inorganic filler is marketed under the trademark MILLICARB.

It has been surprisingly found that when applying the block copolymer composition on at least one side of a fabric according to the present invention by one step processing techniques, such as extrusion-coating of a hot melt composition or fusion of applied powdered compositions, conveyor belts could be obtained, showing a very good bonding of the polymer composition to the fabric and in particular to the polyester fabric of 1.0 N/mm or more, due to the low melt viscosity (high melt flow) of these finally applied melt compositions, enabling a better penetration of the fabric, giving rise to excellent 180°T-peel strength.

On the other hand the conveyor belts, obtainable according to the present invention were found to show an attractive flexibility in combination with a required abrasion resistance (DIN abrasion < 290 mm³) and hardness (Shore A hardness > 30).

It will be appreciated that another aspect of the present invention is formed by the process for manufacturing conveyor belts, comprising the application of the block copolymer composition as specified hereinbefore on at least one side of a fabric to form a coating layer having a thickness in the range of from 0.5 to 5 mm and preferably from 1 to 3 mm in the form of a hot melt composition or in the form of a powder layer.

The application of the hot melt may take place by means of usual application techniques and more in particular by an extrusion-coating step, using a three roll take off to compress sheet and fabric, applying a temperature of at least 100 °C and preferably 140 °C of the hot extruded sheet.

It will be appreciated that according to another aspect of the present invention, the block copolymer compositions as hereinbefore specified can also be applied as a fine powder, e.g. obtained by cryogenic milling (as specified in the copending European patent application No. 0 659 831), into a suitable layer and subsequent heating said layer by e.g. IR irradiation to achieve a continuous layer.

According to an alternative embodiment of this application aspect, the finally desired block copolymer layer may be built up by a combination of hot melt application and a fine powder application/fusing of the particles.

From US patent No. 4,623,574 ballistic resistant composite articles were known, which articles comprised a network of high strength fibers which individually were coated with an elastomeric matrix material.

From British patent application No. 2181670 were known tubular lining materials for pipelines, having warps and wefts of threads of intertwisted filament yarns and speen yarns of synthetic fibres and a coating of a blend of polyethylene and styrene-ethylene-butylene, penetrating into the interstices of the fabric structure.

However, no technical teaching leading to the conveyor belts of the present invention, can be derived from these publications.

The invention will be further illustrated by the following examples, however, without restricting its scope to these embodiments.

### EXAMPLE 1

(a) Hot melt composition 1, (see Table) containing 100 parts by weight of CARIFLEX TR-KX158 block copolymer (later on denoted by KRATON D 4271C) and having a melt flow rate of 15 g/10 min. at 190 °C/2.16 kg, was applied to a PET fabric, containing 18*18 threads/cm² and each having an average thickness of about 100 µm by means of an extrusion coating process. The experiments were carried out on a BRABENDER single screw extruder, L/D = 30 provided with a slit-die of 10 cm width and a die gap of about 1 mm. The hot extruded sheet (melt temperature in the die 155 °C) was immediately applied on the fabric and wound up via a three roll "take off" unit.
   In this unit the lower and upper roll were movable and connected via springs to the fixed middle roll, therewith providing some compression of the sheet and the fabric.
   The distance between the rolls was set to about 1.5 mm. The temperature of the first two rolls was 80 °C, while the third roll had a temperature of about 15 °C. By means of this equipment a sheet of about 1 mm was applied to the fabric in a continuous way.
   The threads of the PET fabric were made up of short(cut) filaments to improve the bonding. The bonding force between the composition and the PET fabric was determined by means of a T-peel test according to ASTM D 1876. For all samples measured cohesive failure was found which means that the bonding force is at least 1.3 N/mm.
(b) This same composition was cryogenically milled to a fine powder, having the following particle size distribution:
   fraction of particles < 425 micron : 98%
   fraction of particles < 250 micron : 31%
   fraction of particles < 100 micron : 1.0%
   This powder was coated on the hereinbefore specified PET web as used in Example 1(a) and fused at 180°C, resulting in equal or better T-peel strength as compared to those obtained with hot melt extrusion coating.

### EXAMPLE 2

Hot melt composition 2, containing a block copolymer grade as specified in the Table was applied in the same way as described in Example 1 to the same PET fabric. The bonding between the composition and the fabric was found to be at least 1.3 N/mm according to the herein before mentioned method.

### Example 3

Hot melt composition 3, containing the same ingredients as composition 1 with additionally 100 parts of MILLICARB giving it a melt flow rate (M FR) of 17 g/10 min at 190 °C/2.16 kg, was applied to the same type of fabric and in the same way as described in Examples 1 and 2.

The bonding of the sheet to the fabric was determined by means of a T-peel test according to ASTM D 1876. For all samples measured cohesive failure was found, which means that the bonding force is at least 1.3 N/mm.

### Example 4

a) A hot melt composition 4 was prepared, containing 100 parts by weight of CARIFLEX TR KX-158 block copolymer (later on denoted by KRATON D-4271C) and having a melt flow rate of 63 g/10 min at 190°C/2.16 kg. The composition was applied on the PET fabric and under the conditions used in Example 1.
b) This composition was cryogenically milled to fine powder, having the following particle size distribution:
fraction of particles < 710 micron : 100%
fraction of particles < 500 micron : 91.5%
fraction of particles < 250 micron : 7.0%
fraction of particles < 100 micron : 4.0%
The powder can be fused at temperatures in the range of from 170-180°C, resulting in equal or larger better T-peel strength as compared to those obtained with hot melt extrusion coating.

| Composition | | 1 | 2 | 4 |
|---|---|---|---|---|
| CARIFLEX TR KX158 (KRATON D 4271C) | | 100 | | 100 |
| CARIFLEX TR-4113 (KRATON D 4113) | | | 100 | |
| Toughened Polystyrene 476 | | 5 | 30 | |
| HERCOLITE 240 (α methyl styrene end block resin) | | | | 30 |
| Oil (EZL 675) | | 30 | 20 | |
| Oil (CATENEX SM 925) | | | | 28 |
| KEMAMIDE E | | 3 | 3 | |
| IRGANOX 1010 | | 1 | 1 | |
| IRGANOX 565 | | | | 0.1 |
| TINUVIN P | | | | 0.3 |
| TiO₂ | | 1 | 1 | |
| MFR (190 °C/2.16 kg g/10 min | | 15 | 17 | 63 |
| Hardness Shore A | 0 s. | 41 | 42 | 73 |
| | 30 s. | 38 | 39 | 71 |
| Tensile strength MPa | | 4.5 | 4.1 | 8.2 |
| DIN Abraxion mm³ | | 195 | 288 | 260 |
| KEMAMIDE E, IRGANOX, TINUVIN are trademarks | | | | |

## Claims

1. Conveyor belts, obtainable by application of a block copolymer composition, on at least one side of a fabric having from 5 to 25 threads per cm in both directions, while the threads in said fabric have a thickness in the range of from 20 µm to 300 µm, the block copolymer composition comprising
(a) a block copolymer, containing at least two terminal poly(vinylaromatic) blocks and at least one internal poly(conjugated diene) block, said block copolymer optionally being modified by grafting polar moieties on it,
(b) a non-aromatic plasticizing oil, and
(c) a terminal block compatible resin.

2. Conveyor belt according to claim 1, characterized in that the coating density of the block copolymer composition is in the range of from 0.5 to 3 g/cm² and the coating thickness is in the range of from 0.5 to 5 mm.

3. Conveyor belts according to claim 1 or 2, characterized in that as component (a) is used a block copolymer, containing substantially pure poly(styrene) blocks and substantially pure poly(butadiene) or poly(isoprene) blocks.

4. Conveyor belts according to claims 1-3, characterized in that as component (a) a block copolymer is used, which has been modified by grafting to them a polar entity, such as carboxylic acids or derivatives thereof, epoxy compounds, silane compounds, amines or amides.

5. Conveyor belts according to claim 4, characterized in that the poly(conjugated diene) blocks have been grafted with maleic anhydride or acrylic acid esters.

6. Conveyor belts according to claim 1, characterized in that as component (a) mixtures of unmodified and modified block copolymers are applied, in which mixtures the weight ratios can vary in the range of from 99/1 to 40/60, and preferably in the range of from 90/10 to 50/50.

7. Conveyor belts according to claims 1-6, characterized in that as component (b) either petroleum derived oils which are totally non-aromatic or polyolefins, having a molecular weight in the range of from 500 to 6000, are applied.

8. Conveyor belts according to claim 7, characterized in that the polyolefin is applied in amounts of from 10 to 50 parts by weight per 100 parts by weight of block copolymer.

9. Conveyor belts according to claim 1, characterized in that 1 to 40 parts by weight of a terminal block modifying resin are applied per 100 parts by weight of block.

10. Conveyor belts according to claim 1, characterized in that the block copolymer composition contains in addition to the three before-mentioned main components one or more auxiliary agents, such as stabilizers, fillers, colouring agents, slip agents and additional thermoplastic polymers.

11. A process for manufacturing conveyor belts, comprising the steps of:
forming a block copolymer composition comprising:
a block copolymer, containing at least two terminal poly(vinylaromatic) blocks and at least one internal poly(conjugated diene) block, said block copolymer optionally being modified by grafting polar moieties on it;
a non-aromatic plasticizing oil; and
a terminal block compatible resin; and
applying the block copolymer composition on at least one side of a fabric to form a coating layer having a thickness in the range of from 0.5 to 5 mm, the fabric having from 5 to 25 threads per cm in both directions, while the threads in said fabric have a thickness in the range of from 20µ to 300µ.

12. A process, according to claim 11, characterized in that the block copolymer composition is applied onto the fabric either as a hot melt or as a finely divided powder, which is subsequently fused into a continuous layer by heat treatment.

## Patentansprüche

1. Förderbänder, die durch Auftragen einer Blockcopolymerzusammensetzung auf wenigstens eine Seite eines Gewebes mit 5 bis 25 Fäden pro cm in beiden Richtungen erhältlich sind, wobei die Fäden in dem Gewebe eine Stärke im Bereich von 20 µm bis 300 µm aufweisen und wobei die Blockcopolymerzusammensetzung
(a) ein Blockcopolymer mit einem Gehalt an wenigstens zwei endständigen Poly(Vinylaromat)blöcken und an wenigstens einem innenliegenden Poly(konjugiertes Dien)block, wobei dieses Blockcopolymer gegebenenfalls durch Aufpfropfen polarer Reste modifiziert worden ist,
(b) ein nichtaromatisches weichmachendes Öl und
(c) ein mit dem endständigen Block verträgliches Harz umfaßt.

2. Förderband nach Anspruch 1, dadurch gekennzeichnet, daß die Überzugsdichte der Blockcopolymerzusammensetzung im Bereich von 0,5 bis 3 g/cm² und die Beschichtungsdichte im Bereich von 0,5 bis 5 mm liegen.

3. Förderbänder nach Anspruch 1 oder 2, dadurch gekennzeichnet, daß als Komponente (a) ein Blockcopolymer verwendet wird, das im wesentlichen reine Poly(Styrol)blöcke und im wesentlichen reine Poly(Butadien)- oder Poly(Isopren)blöcke enthält.

4. Förderbänder nach den Ansprüchen 1 bis 3, dadurch gekennzeichnet, daß als Komponente (a) ein Blockcopolymer verwendet wird, das durch Aufpfopfen einer polaren Substanz, wie Carbonsäuren oder Derivate hievon, Epoxyverbindungen, Silanverbindungen, Amine oder Amide, modifiziert worden ist.

5. Förderbänder nach Anspruch 4, dadurch gekennzeichnet, daß die Poly(konjugiertes Dien)blöcke mit Maleinsäureanhydrid oder Acrylsäureestern gepfropft worden sind.

6. Förderbänder nach Anspruch 1, dadurch gekennzeichnet, daß als Komponente (a) Gemische aus unmodifizierten und modifizierten Blockcopolymeren angewendet werden, in welchen Gemischen die Gewichtsverhältnisse in dem Bereich von 99/1 bis 40/60 und vorzugsweise im Bereich 90/10 bis 50/50 variieren können.

7. Förderbänder nach den Ansprüchen 1 bis 6, dadurch gekennzeichnet, daß als Komponente (b) entweder von Erdöl abgeleitete Öle, die zur Gänze nichtaromatisch sind, oder Polyolefine mit einem Molekulargewicht im Bereich von 500 bis 6.000 angewendet werden.

8. Förderbänder nach Anspruch 7, dadurch gekennzeichnet, daß das Polyolefin in Mengen von 10 bis 50 Gewichtsteilen je 100 Gewichtsteile Blockcopolymer angewendet wird.

9. Förderbänder nach Anspruch 1, dadurch gekennzeichnet, daß 1 bis 40 Gewichtsteile eines den endständigen Block modifizierenden Harzes je 100 Gewichtsteile Blockcopolymer angewendet werden.

10. Förderbänder nach Anspruch 1, dadurch gekennzeichnet, daß die Blockcopolymerzusammensetzung zusätzlich zu den drei zuvor erwähnten Hauptkomponenten ein oder mehreren Hilfsmittel, wie Stabilisatoren, Füllstoffe, Färbemittel, Gleitmittel und weitere thermoplastische Polymere, enthält.

11. Verfahren zur Herstellung von Förderbändern, das die folgenden Stufen umfaßt:
Ausbilden einer Blockcopolymerzusammensetzung, die ein Blockcopolymer mit einem Gehalt an wenigstens zwei endständigen Poly(Vinylaromat)blöcken und an wenigstens einem innenliegenden Poly(konjugiertes Dien)block, welches Blockcopolymer gegebenenfalls durch Aufpfropfen polarer Reste modifiziert worden ist;
ein nichtaromatisches weichmachendes Öl; und
ein mit dem endständigen Block verträgliches Harz umfaßt; und
Auftragen der Blockcopolymerzusammensetzung auf wenigstens eine Seite eines Gewebes zur Ausbildung einer Überzugsschicht mit einer Stärke im Bereich von 0,5 bis 5 mm, welches Gewebe 5 bis 25 Fäden pro cm in beiden Richtungen aufweist, während die Fäden in dem Gewebe eine Stärke im Bereich von 20 µm bis 300 µm besitzen.

12. Verfahren nach Anspruch 11, dadurch gekennzeichnet, daß die Blockcopolymerzusammensetzung auf das Gewebe entweder als eine Heißschmelze oder als ein fein verteiltes Pulver aufgebracht wird, welches Pulver anschließend durch Wärmebehandlung zu einer kontinuierlichen Schicht geschmolzen wird.

## Revendications

1. Bandes transporteuses, obtenables par l'application d'une composition de copolymère bloc, sur au moins une face d'un tissu comportant de 5 à 25 fils par centimètre dans les deux directions, les fils de ce tissu ayant une épaisseur dans la gamme de 20 µm à 300 µm, la composition de copolymère bloc comprenant :
(a) un copolymère bloc, contenant au moins deux blocs de poly(vinyl aromatique) terminaux et au moins un bloc de poly(diène conjugué) intérieur, ledit copolymère bloc étant éventuellement modifié par greffage de fragments polaires sur celui-ci,
(b) une huile plastifiante non aromatique, et
(c) une résine compatible avec les blocs terminaux.

2. Bandes transporteuses suivant la revendication 1, caractérisées en ce que la densité de revêtement de la composition de copolymère bloc se situe dans la gamme de 0,5 à 3 g/cm² et l'épaisseur de revêtement se situe dans la gamme de 0,5 à 5 mm.

3. Bandes transporteuses suivant l'une ou l'autre des revendications 1 et 2, caractérisée en ce que comme composant (a) on utilise un copolymère bloc, contenant des blocs de poly(styrène) essentiellement purs et des blocs de poly(butadiène) ou poly(isoprène) essentiellement purs.

4. Bandes transporteuses suivant l'une quelconque des revendications 1 à 3, caractérisées en ce que comme composant (a) on utilise un copolymère bloc, qui a été modifié en lui greffant une entité polaire, telle que des acides carboxyliques ou leurs dérivés, des composés époxy, des composés de silane, des amines ou des amides.

5. Bandes transporteuses suivant la revendication 4, caractérisées en ce que les blocs de poly(diéne conjugué) ont été greffés avec de l'anhydride maléique ou des esters d'acide acrylique.

6. Bandes transporteuses suivant la revendication 1, caractérisée en ce que comme composant (a) on applique des mélanges de copolymères blocs non modifiés et modifiés, mélanges dans lesquels les rapports en poids peuvent varier dans la gamme de 99/1 à 40/60, et avantageusement dans la gamme de 90/10 à 50/50.

7. Bandes transporteuses suivant l'une quelconque des revendications 1 à 6, caractérisées en ce qu'on applique comme composant (b) des huiles dérivées de pétrole qui sont totalement non aromatiques ou des polyoléfines, ayant un poids moléculaire dans la gamme de 500 à 6.000.

8. Bandes transporteuses suivant la revendication 7, caractérisées en ce que la polyoléfine est appliquées en des quantités de 10 à 50 parties en poids pour 100 parties en poids de copolymère bloc.

9. Bandes transporteuses suivant la revendication 1, caractérisées en ce qu'on applique 1 à 40 parties en poids d'une résine de modification de bloc terminal pour 100 parties en poids de bloc.

10. Bandes transporteuses suivant la revendication 1, caractérisées en ce que la composition de copolymère bloc contient en plus des trois composants principaux mentionnés précédemment un ou plusieurs agents auxiliaires, tels que des stabilisants, charges, agents de coloration, agents de glissement et polymères thermoplastiques additionnels.

11. Procédé de fabrication de bandes transporteuses, comprenant les étapes suivantes :
la formation d'une composition de copolymère bloc comprenant :
un copolymère bloc, contenant au moins deux blocs de poly(vinyl aromatique) terminaux et au moins un bloc de poly(diène conjugué) intérieur, ledit copolymère bloc étant éventuellement modifié par greffage de fragments polaires sur celui-ci;
une huile plastifiante non aromatique, et une résine compatible avec les blocs terminaux; et
l'application de la composition de copolymère bloc sur au moins une face d'un tissu pour former une couche de revêtement ayant une épaisseur dans la gamme de 0,5 à 5 mm, le tissu comportant de 5 à 25 fils par centimètre dans les deux directions, les fils de ce tissu ayant une épaisseur dans la gamme de 20 µm à 300 µm.

12. Procédé suivant la revendication 11, caractérisé en ce que la composition de copolymère bloc est appliquée sur le tissu soit sous la forme d'une masse fondue chaude soit sous la forme d'une poudre finement divisée, qui est ensuite fondue en une couche continue par un traitement thermique.
